# EUROPÄISCHE PATENTSCHRIFT

(11) **EP 4 279 356 B1**
(45) Veröffentlichungstag und Bekanntmachung des Hinweises auf die Patenterteilung: **10.07.2024**
(21) Anmeldenummer: 23173824.6
(22) Anmeldetag: 17.05.2023
(51) Int. Cl.: B62D 1/08, B62D 1/04

(54) **VERSTELLEINRICHTUNG FÜR EIN LENKRAD EINES KRAFTFAHRZEUGS**
ADJUSTING DEVICE FOR A STEERING WHEEL OF A MOTOR VEHICLE
DISPOSITIF DE RÉGLAGE POUR UN VOLANT DE DIRECTION D'UN VÉHICULE AUTOMOBILE

(30) Priorität: 20.05.2022 DE 102022205078
(43) Veröffentlichungstag der Anmeldung: 22.11.2023
(73) Patentinhaber: Witte Automotive GmbH, 42551 Velbert (DE); Ford Global Technologies, LLC, Dearborn, MI 48126-2701 (US)
(72) Erfinder: JANSSEN, Thorsten, 42551 Velbert (DE); SCHAPS, Markus, 44651 Herne (DE); KLEIN, Heinz-Joachim, 42781 Haan (DE); KÜPPER, Philipp, 41515 Grevenbroich (DE); KREUZ, Thomas, 53894 Mechernich (DE); FASSBENDER, Martin, 53913 Buschhoven (DE)
(74) Vertreter: Liedtke & Partner Patentanwälte

(56) Entgegenhaltungen:
- WO-A1-2021/205039
- FR-A1- 3 108 884
- US-A1- 2020 101 998
- US-B1- 11 180 177

## Beschreibung

Die Erfindung betrifft eine Verstelleinrichtung für ein Lenkrad eines Kraftfahrzeugs.

Im Stand der Technik sind Lenkräder bekannt, die aus einer Fahrposition in mindestens eine weitere Position schwenkbar sind.

US 11,180,177 B1 beschreibt eine Lenkradanordnung, umfassend einen Kranz, der beweglich mit einer Basis zur Bewegung zwischen Fahr- und Gebrauchspositionen verbunden ist. Ein Bewegungssteuermechanismus ist konfiguriert, um den Kranz selektiv in der Fahrposition relativ zu der Basisstruktur zu verriegeln. Der Bewegungssteuerungsmechanismus umfasst eine Arretierung, die konfiguriert ist, um die Randstruktur in der Gebrauchsposition relativ zu der Basisstruktur zu halten, wodurch ein Benutzer eine Kraft auf die Randstruktur aufbringen kann, um die Arretierung zu überwinden und die Randstruktur von der Gebrauchsposition zur Fahrposition zu bewegen.

DE 10 2021 123 507 A1 beschreibt ein Lenkrad für ein Fortbewegungsmittel, umfassend eine Nabe und einen um die Nabe verlaufenden Kranz, wobei der Kranz zwischen einer Lenkposition und mindestens einer Nichtlenkposition um eine Kippachse schwenkbar gelagert ist. Das Lenkrad umfasst zwei lösbare Arretieranordnungen, die bezogen auf die Nabe gegenüberliegend angeordnet sind, wobei eine jede der zwei Arretieranordnungen eine nabenseitige Naben-Arretiervorrichtung und eine kranzseitige Kranz-Arretiervorrichtung zum Blockieren des Schwenkens durch wechselseitigen Eingriff aufweist. Die Naben-Arretiervorrichtung und die Kranz-Arretiervorrichtung sind dazu eingerichtet, beabstandet zur Kippachse miteinander einzugreifen.

FR 3 108 884 A1 beschreibt ein Fahrzeuglenkrad, umfassend:
- eine Nabe,
- eine bewegliche Struktur, die zwischen einer Fahrposition und mindestens einer Konsolenposition bewegbar ist,
   wobei die bewegliche Struktur einen ersten Fahrpositionsanschlag und die Nabe einen zweiten Fahrpositionsanschlag umfasst,
- Verriegelungsmittel, die ein Verriegelungselement umfassen, das so angeordnet ist, dass es die bewegliche Struktur in der Fahrposition verriegelt,
wobei die Verriegelungsmittel ein Steuerelement umfassen, das so angeordnet ist, dass es eine Schubkraft auf das Verriegelungselement ausübt, so dass das Verriegelungselement den ersten Fahrpositionsanschlag auf den zweiten Fahrpositionsanschlag drückt.

Aufgabe der vorliegenden Erfindung ist es, eine neuartige Verstelleinrichtung für ein schwenkbares Lenkrad eines Kraftfahrzeugs anzugeben.

Die Aufgabe wird erfindungsgemäß gelöst durch eine Verstelleinrichtung für ein Lenkrad eines Kraftfahrzeugs gemäß Anspruch 1.

Eine erfindungsgemäße Verstelleinrichtung für ein Lenkrad eines Kraftfahrzeugs umfasst einen Lagerbock mit einer darin angeordneten ersten Achse, die parallel zu einer Querachse des Fahrzeugs ausgerichtet oder ausrichtbar ist und um die das Lenkrad zwischen einer Fahrposition und mindestens einer weiteren Position schwenkbar ist, wobei eine Drehfalle mit einem in einer Arbeitsebene angeordneten Drehfallenelement drehfest mit dem Lenkrad verbunden und mit diesem zusammen um die erste Achse schwenkbar ist, wobei eine zweite Achse parallel zur ersten Achse im Lagerbock angeordnet ist, wobei ein Kupplungshebel auf der zweiten Achse zur Interaktion mit dem Drehfallenelement angeordnet ist, wobei der Kupplungshebel auf der zweiten Achse aus der Arbeitsebene heraus entgegen der Kraft einer Feder verschiebbar angeordnet ist, wobei der Kupplungshebel eine Anschlagsfläche aufweist, die zum Eingriff in mindestens eine korrespondierende Anschlagsfläche des Drehfallenelements eingreift und daran anschlägt, wenn das Lenkrad und damit auch die Drehfalle in die mindestens eine weitere Position geschwenkt ist, wobei mindestens eine der Anschlagsflächen eine Schräge aufweist, durch die der Kupplungshebel bei Aufbringen einer vorbestimmten Kraft auf das Lenkrad aus der weiteren Position in Richtung der Fahrposition entgegen der Kraft der Feder aus dem Eingriff mit dem Drehfallenelement heraus verdrängbar ist oder verdrängt wird.

Auf diese Weise wird eine mechanische Überlastauslösung für das neigungsverstellbare Lenkrad bereitgestellt, um dieses aus der weiteren Position, beispielsweise einer Komfortposition, insbesondere einer ersten Komfortposition oder einer zweiten Komfortposition, in die Fahrposition stellen zu können. In weiteren Ausführungsbeispielen können auch mehr als zwei weitere Positionen, beispielsweise Komfortpositionen, vorgesehen sein.

In einer möglichen Weiterbildung weist die Drehfalle ferner ein in einer weiteren Arbeitsebene angeordnetes weiteres Drehfallenelement auf, wobei eine Sperrklinke auf der zweiten Achse schwenkbar zur Interaktion mit dem weiteren Drehfallenelement angeordnet ist, wobei die Sperrklinke eine Anschlagsfläche aufweist, die durch die Kraft einer Rückstellfeder in eine korrespondierende Anschlagsfläche des weiteren Drehfallenelements eingreift und daran anschlägt, wenn das Lenkrad und damit auch die Drehfalle in die Fahrposition geschwenkt ist. Diese Anschlagsflächen weisen insbesondere keine Schräge auf, durch die eine mechanische Überlastauslösung möglich wäre. Auf diese Weise ist eine sichere Verriegelung des Lenkrads in der Fahrposition möglich.

In einem weiteren Ausführungsbeispiel kann ein Betätigungsmechanismus, beispielsweise umfassend einen Bowdenzug, angeordnet sein, um den Kupplungshebel und/oder die Sperrklinke aus einem Eingriff mit der Drehfalle heraus um die zweite Achse zu schwenken. Der Betätigungsmechanismus kann zur manuellen Betätigung und/oder zur Bedienung durch einen elektrischen Antrieb konfiguriert sein.

In einer Weiterbildung kann der Kupplungshebel mittels einer Feder zur Arbeitsebene hin vorgespannt sein. Eine Federkonstante dieser Feder bestimmt zusammen mit Reibwerten der im Eingriff befindlichen Kontaktflächen und deren Schrägen sowie den Hebellängen der beteiligten mechanischen Komponenten die auf das Lenkrad aufzubringende Kraft für die mechanische Überlastauslösung. Damit ist die Überlastauslösung mehrfach reproduzierbar. Durch Auswahl der Feder mit der entsprechenden Federkonstanten ist die erforderliche Kraft für die Überlastauslösung einstellbar.

In einer Weiterbildung kann der Kupplungshebel in verdrängter Position von einem Führungselement an der Drehfalle am rotatorischen Einfallen gehindert sein.

In einem weiteren Ausführungsbeispiel kann ein Mitnehmermechanismus angeordnet sein, der beim Schwenken des Kupplungshebels um einen vorbestimmten Drehwinkel auch die Sperrklinke mitnimmt und aus einem möglichen Eingriff mit dem weiteren Drehfallenelement heraus schwenkt. Der Mitnehmermechanismus kann so ausgestaltet sein, dass ein unabhängiges Schwenken des Kupplungshebels gegenüber der Sperrklinke innerhalb eines vorbestimmten Drehwinkels möglich ist. Hierzu kann beispielsweise ein Mitnehmernocken am Kupplungshebel in eine Nockenbahn an der Sperrklinke oder umgekehrt eingreifen. Auf diese Weise genügt nur ein Betätigungsmechanismus oder Bowdenzug für das Schwenken des Kupplungshebels und der Sperrklinke.

In einer weiteren Ausführungsform kann das Lenkrad einen Lenkradkranz aufweisen, der bei geradegestelltem Lenkrad in der Fahrposition zumindest im Wesentlichen in einer Ebene liegt, die rechtwinklig zu einer Lenksäule oder Lenkachse ausgerichtet ist, wobei als weitere Position vorgesehen ist:
- eine erste Komfortposition, in der der Lenkradkranz in einer Ebene liegt, die zumindest im Wesentlichen waagerecht zu einer Fahrbahnebene ausgerichtet ist, und
- eine zwischen der Fahrposition und der ersten Komfortposition liegende zweite Komfortposition, in der der Lenkradkranz aus der Waagerechten leicht, jedoch weniger als in der Fahrposition, zu einem Fahrer hin geneigt ist.

In einer möglichen Ausführungsform sind eine Federkonstante der Feder und ein Winkel der Schräge der Anschlagsfläche des Kupplungshebels und/oder der mindestens einen damit korrespondierenden Anschlagsfläche so bemessen, dass eine Kraft auf einen Lenkradkranz des Lenkrads auf dessen Sechs-Uhr-Position, insbesondere eine Kraft, die ein Fahrer oder Nutzer in einer Ausnahmesituation oder Notlage in der Lage ist, auf den Lenkradkranz aufzubringen, beispielsweise eine Kraft von etwa 150 N bis 400 N, insbesondere 200 N, zum Verdrängen des Kupplungshebels aus der weiteren Position in Richtung der Fahrposition entgegen der Kraft der Feder aus der Arbeitsebene und damit aus dem Eingriff mit dem Drehfallenelement heraus führt.

In einer möglichen Ausführungsform ist zwischen der Arbeitsebene und der weiteren Arbeitsebene ein Anschlag angeordnet, der verhindert, dass die Sperrklinke die weitere Arbeitsebene in Richtung der Arbeitsebene verlässt, und dass der Kupplungshebel aus der Arbeitsebene in Richtung der weiteren Arbeitsebene verschoben wird.

In einer möglichen Ausführungsform ist ein Sensor vorgesehen, der dazu konfiguriert ist zu detektieren, ob sich das Lenkrad gesichert in der Fahrposition befindet. Der Sensor kann als ein Mikroschalter ausgebildet sein. Eine Nockenfläche kann an der Sperrklinke vorgesehen sein, die den Mikroschalter nur dann betätigt, wenn die Sperrklinke im Eingriff mit dem weiteren Drehfallenelement ist.

In einer Weiterbildung ist auf der ersten Achse und/oder auf der zweiten Achse ein Lager, insbesondere ein metallverstärktes, selbstschmierendes Gleitlager mit einer PTFE-Schicht, angeordnet.

In einer Weiterbildung ist anstatt oder zusätzlich zu der mechanischen Überlastauslösung eine alternative Zusatzauslösung aus der mindestens einen weiteren Position mittels einer für einen Benutzer zugänglichen Öffnungshilfe, insbesondere eines Hebels, eines Griffs und/oder einer Kordel oder eines anderen geeigneten Mittels, vorgesehen. Hierbei kann es möglich sein, dass die Ansteuerung der Sperrklinken durch den Bowdenzug und die zusätzliche Betätigung an den Sperrklinken reziprok erfolgen muss.

Ausführungsbeispiele der Erfindung werden anhand von Zeichnungen näher erläutert. Dabei zeigen:
- Figur 1: eine schematische Ansicht einer Verstelleinrichtung für ein Lenkrad eines Kraftfahrzeugs,
- Figur 2: eine weitere schematische Ansicht der Verstelleinrichtung,
- Figur 3: eine schematische Ansicht eines Lenkrads mit zwei Verstelleinrichtungen gemäß Figuren 1 und 2,
- Figur 4: eine schematische Explosionsdarstellung der Verstelleinrichtung,
- Figur 5: eine schematische Ansicht des Lenkrads in einer Fahrposition, einer ersten Komfortposition und einer zweiten Komfortposition,
- Figur 6: eine weitere schematische Ansicht des Lenkrads in einer Fahrposition, einer ersten Komfortposition und einer zweiten Komfortposition,
- Figur 7: eine schematische Ansicht der Verstelleinrichtung in der Fahrposition,
- Figur 8: eine weitere schematische Ansicht der Verstelleinrichtung in der Fahrposition,
- Figur 9: eine schematische Ansicht der Verstelleinrichtung in der zweiten Komfortposition,
- Figur 10: eine weitere schematische Ansicht der Verstelleinrichtung in der zweiten Komfortposition,
- Figur 11: eine schematische Ansicht der Verstelleinrichtung in der ersten Komfortposition,
- Figur 12: eine weitere schematische Ansicht der Verstelleinrichtung in der ersten Komfortposition,
- Figur 13: eine schematische Ansicht einer Drehfalle mit einem Kupplungshebel,
- Figur 14: eine schematische Ansicht der Drehfalle,
- Figur 15: eine schematische Ansicht der Verstelleinrichtung in der zweiten Komfortposition, wobei der Kupplungshebel aus dem Eingriff mit der Drehfalle heraus verdrängt ist,
- Figur 16: eine schematische Ansicht der Verstelleinrichtung in der ersten Komfortposition, wobei der Kupplungshebel aus dem Eingriff mit der Drehfalle heraus verdrängt ist,
- Figur 17: eine schematische Ansicht der Verstelleinrichtung in der Fahrposition, wobei ein Bowdenzug gezogen ist, und
- Figur 18: eine schematische Ansicht eines Mitnehmermechanismus.

Einander entsprechende Teile sind in allen Figuren mit den gleichen Bezugszeichen versehen.

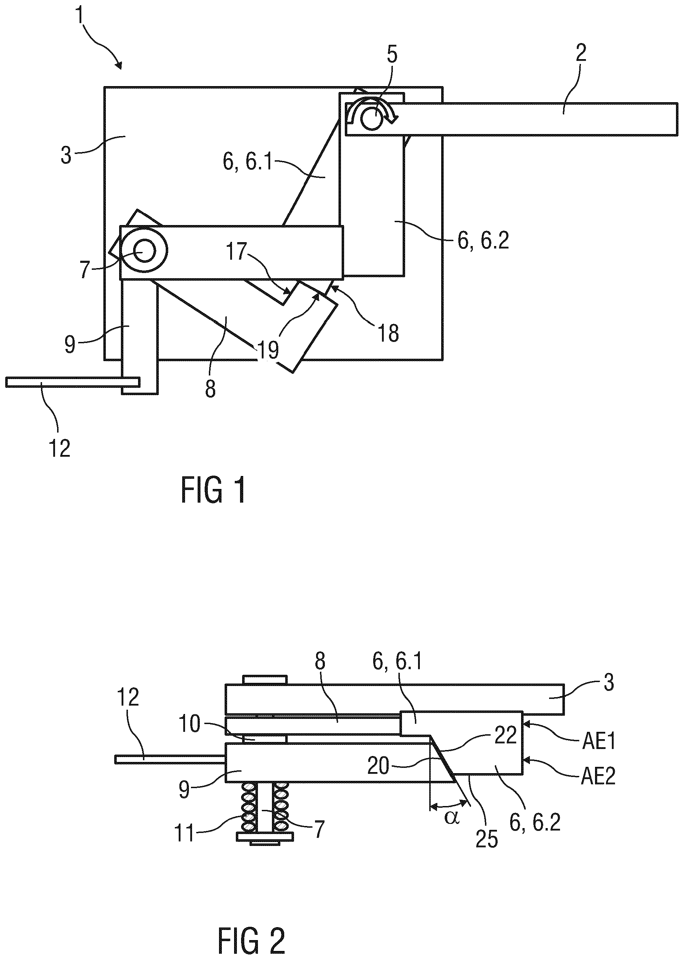

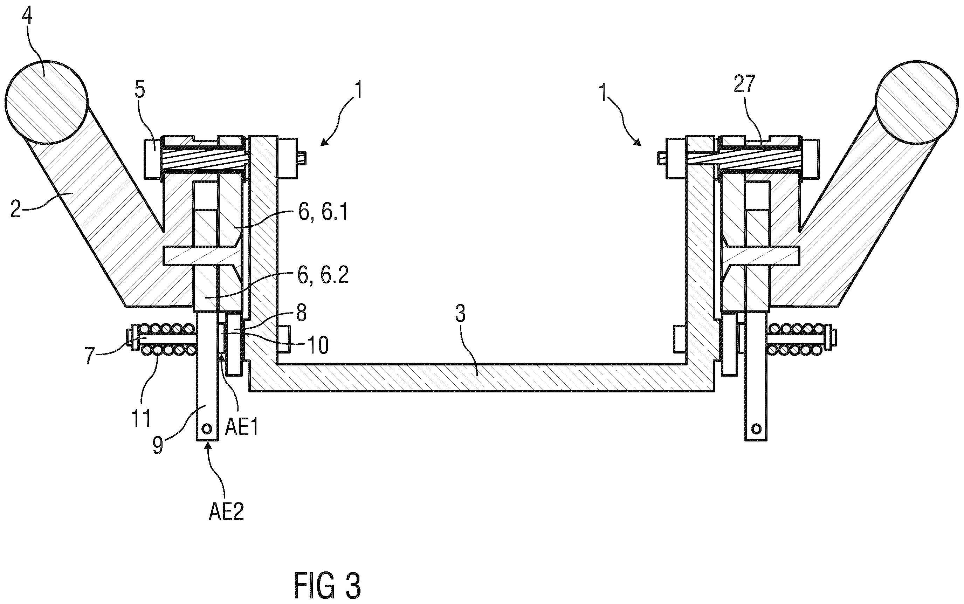

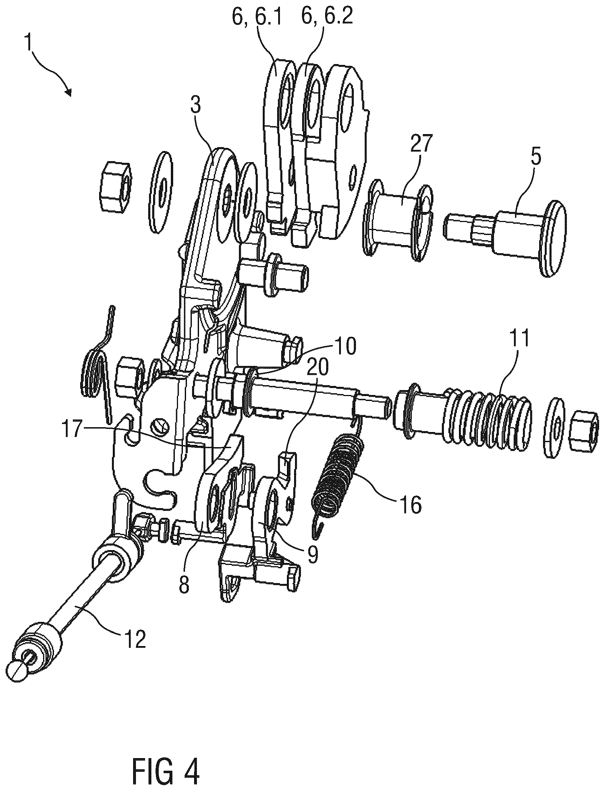

**Figur 1** ist eine schematische Ansicht einer Verstelleinrichtung 1 für ein Lenkrad 2 eines Kraftfahrzeugs. **Figur 2** ist eine weitere schematische Ansicht der Verstelleinrichtung 1. **Figur 3** ist eine schematische Ansicht des Lenkrads 2 mit zwei Verstelleinrichtungen 1 gemäß **Figuren 1 und 2****,** die an einander gegenüberliegenden Seiten des Lenkrads 2 angeordnet sind. **Figur 4** ist eine schematische Explosionsdarstellung der Verstelleinrichtung 1.

Die Verstelleinrichtung 1 weist eine Armatur 3 oder einen Lagerbock 3 auf, der mit einer Lenksäule (nicht dargestellt) verbunden sein kann. Das Lenkrad 2 ist um eine im Lagerbock 3 angeordnete erste Achse 5, die beispielsweise quer zur Lenksäule ausgerichtet sein kann, gegenüber dem Lagerbock 3 schwenkbar, insbesondere so, dass das geradegestellte Lenkrad 2 zwischen
- einer Fahrposition FP, in der ein Lenkradkranz 4 des Lenkrads 2 zumindest im Wesentlichen in einer Ebene liegt, die rechtwinklig zur Lenksäule ausgerichtet ist,
- einer ersten Komfortposition KP1, in der der Lenkradkranz 4 in einer Ebene liegt, die zumindest im Wesentlichen waagerecht zur Fahrbahnebene ausgerichtet ist, und
- einer zwischen der Fahrposition FP und der ersten Komfortposition KP1 liegenden zweiten Komfortposition KP2, in der der Lenkradkranz 4 aus der Waagerechten leicht, jedoch weniger als in der Fahrposition FP, zu einem Fahrer hin geneigt ist,
verstellbar ist.

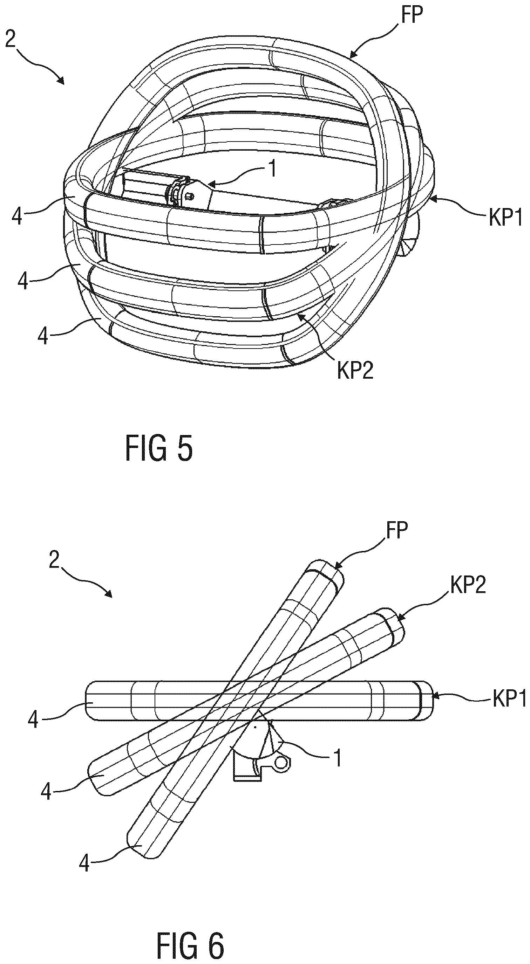

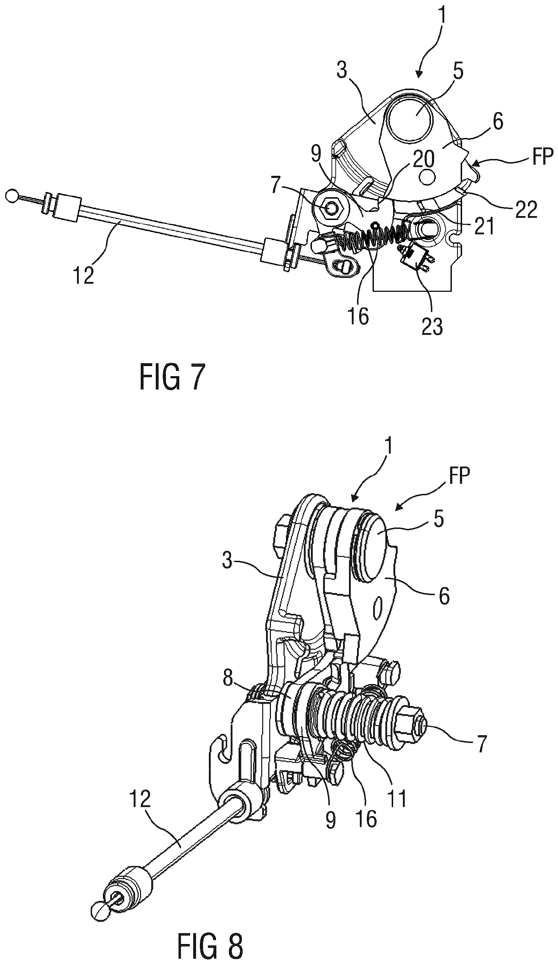

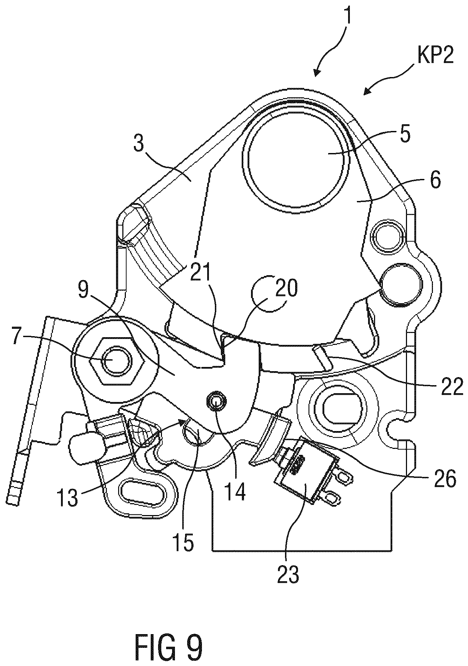

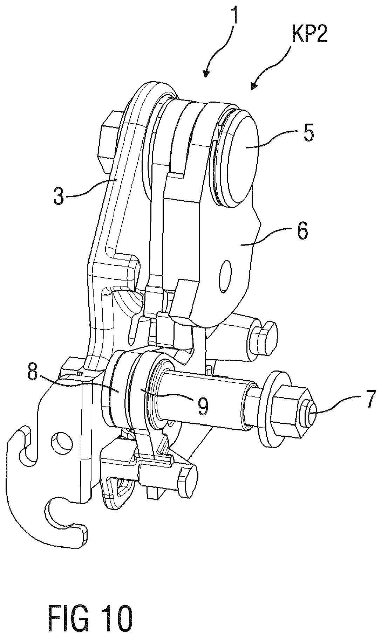

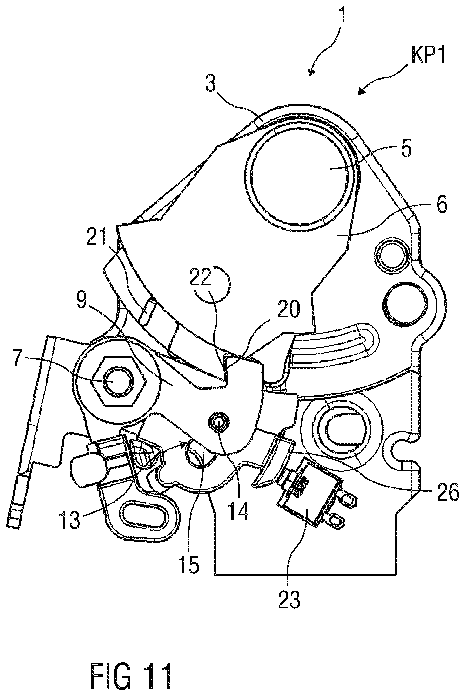

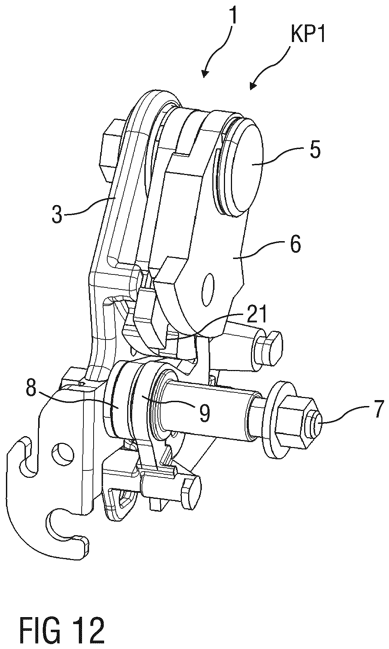

**Figuren 5 und 6** zeigen schematische Ansichten des Lenkrads 2 in den beschriebenen Positionen. **Figuren 7 und 8** zeigen weitere schematische Ansichten der Verstelleinrichtung 1 in der Fahrposition FP. **Figuren 9** **und** **10** zeigen weitere schematische Ansichten der Verstelleinrichtung 1 in der zweiten Komfortposition KP2. **Figuren 11** **und** **12** zeigen weitere schematische Ansichten der Verstelleinrichtung 1 in der ersten Komfortposition KP 1.

Eine Drehfalle 6 mit einem in einer ersten Arbeitsebene AE1 angeordneten ersten Drehfallenelement 6.1 und einem in einer zweiten Arbeitsebene AE2 angeordneten zweiten Drehfallenelement 6.2 ist drehfest mit dem Lenkrad 2 verbunden und mit diesem zusammen um die erste Achse 5 schwenkbar. Hierfür kann ein Lager 27, insbesondere ein Gleitlager, beispielsweise ein metallverstärktes, selbstschmierendes Gleitlager mit einer PTFE-Schicht, auf der ersten Achse 5 angeordnet sein. Das erste Drehfallenelement 6.1 und das zweite Drehfallenelement 6.2 können separat oder als ein gemeinsames Teil ausgebildet sein.

Eine zweite Achse 7 ist parallel zur ersten Achse 5 im Lagerbock 3 angeordnet. Eine Sperrklinke 8 ist auf der zweiten Achse 7 schwenkbar in der ersten Arbeitsebene AE1 der Drehfalle 6 angeordnet, so dass sie mit dem ersten Drehfallenelement 6.1 interagieren kann. Weiterhin ist ein Kupplungshebel 9 auf der zweiten Achse 7 schwenkbar in der zweiten Arbeitsebene AE2 angeordnet, so dass er mit dem zweiten Drehfallenelement 6.2 der Drehfalle 6 interagieren kann.

Zwischen der ersten Arbeitsebene AE1 und der zweiten Arbeitsebene AE2 kann auf der zweiten Achse 7 ein Anschlag 10 vorgesehen sein, der verhindert, dass die Sperrklinke 8 die erste Arbeitsebene AE1 verlässt, und dass der Kupplungshebel 9 aus der zweiten Arbeitsebene AE2 in Richtung der ersten Arbeitsebene AE1 verschoben wird.

Der Kupplungshebel 9 ist jedoch auf der zweiten Achse 7 verschiebbar so angeordnet, dass er aus der zweiten Arbeitsebene AE2 heraus von der Sperrklinke 8 wegbewegt werden kann. Eine Feder 11, beispielsweise eine Schraubenfeder, ist so angeordnet, beispielsweise auf der zweiten Achse 7, dass sie den Kupplungshebel 9 zur zweiten Arbeitsebene AE2 hin vorspannt, so dass dieser nur entgegen der Kraft der Feder 11 aus der zweiten Arbeitsebene AE2 verschoben werden kann. Auch auf der zweiten Achse 7 kann ein Lager, insbesondere ein Gleitlager, beispielsweise ein metallverstärktes, selbstschmierendes Gleitlager mit einer PTFE-Schicht, angeordnet sein, insbesondere um das axiale Verschieben des Kupplungshebels 9 zu ermöglichen oder zu erleichtern.

Ein Betätigungsmechanismus 12, beispielsweise ein Bowdenzug 12, ist mit dem Kupplungshebel 9 verbunden, um diesen um die zweite Achse 7 aus einem möglichen Eingriff mit dem zweiten Drehfallenelement 6.2 heraus zu schwenken. Der Betätigungsmechanismus 12 kann zur manuellen Betätigung und/oder zur Bedienung durch einen elektrischen Antrieb konfiguriert sein.

Die Sperrklinke 8 und der Kupplungshebel 9 sind zumindest innerhalb eines vorbestimmten Drehwinkels voneinander unabhängig um die zweite Achse 7 schwenkbar. Es kann jedoch ein Mitnehmermechanismus 13 vorgesehen sein, der beim Schwenken des Kupplungshebels 9 um einen vorbestimmten Drehwinkel auch die Sperrklinke 8 mitnimmt und aus einem möglichen Eingriff mit dem ersten Drehfallenelement 6.1 heraus schwenkt.

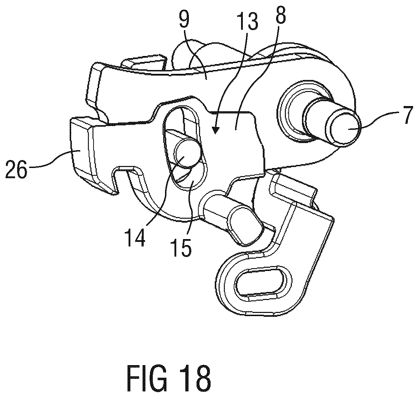

**Figur 18** ist eine schematische Ansicht des Mitnehmermechanismus 13. Der Mitnehmermechanismus 13 kann beispielsweise einen Mitnehmernocken 14 am Kupplungshebel 9 und eine Nockenbahn 15 in der Sperrklinke 8 umfassen, in die der Mitnehmernocken 14 eingreift. Alternativ kann der Mitnehmernocken 14 an der Sperrklinke 8 und die Nockenbahn 15 im Kupplungshebel 9 angeordnet sein.

Es kann eine Rückstellfeder 16 vorgesehen sein, die den Kupplungshebel 9 zu einem Eingriff mit dem zweiten Drehfallenelement 6.2 hin vorspannt. Wegen des Mitnehmermechanismus 13 wird dadurch auch die Sperrklinke 8 zu einem Eingriff mit dem ersten Drehfallenelement 6.1 hin vorgespannt.

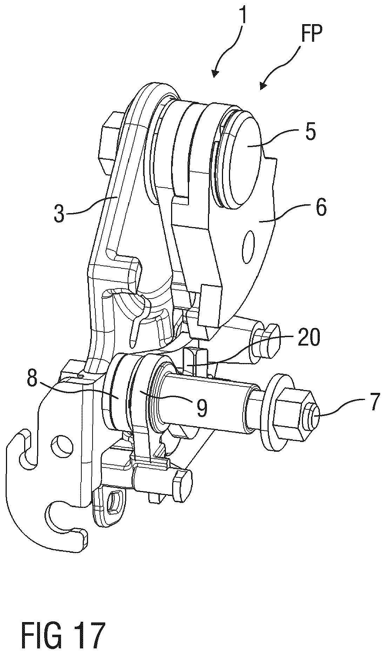

Die Sperrklinke 8 weist eine erste Anschlagsfläche 17 auf, die durch die Kraft der Rückstellfeder 16 in eine korrespondierende zweite Anschlagsfläche 18 des ersten Drehfallenelements 6.1 eingreift und daran anschlägt, wenn das Lenkrad 2 und damit auch die Drehfalle 6 in die Fahrposition FP geschwenkt und der Betätigungsmechanismus 12 nicht betätigt ist. Ein Schwenken des Lenkrads 2 aus der Fahrposition FP heraus in Richtung der zweiten Komfortposition KP2 oder der ersten Komfortposition KP1 ist nur dann möglich, wenn zuvor der Betätigungsmechanismus 12 betätigt wird, beispielsweise der Bowdenzug 12 gezogen wird, um die Sperrklinke 8 aus dem Eingriff mit dem ersten Drehfallenelement 6.1 heraus zu schwenken. **Figur 17** ist eine schematische Ansicht der Verstelleinrichtung 1 in der Fahrposition FP, wobei der Bowdenzug 12 gezogen ist. Wenn das Lenkrad 2 sich in der zweiten Komfortposition KP2 oder der ersten Komfortposition KP1 befindet, dann liegt die Sperrklinke 8 infolge der Kraft der Rückstellfeder 16 an einer Peripheriefläche 19 des ersten Drehfallenelements 6.1 an und behindert dessen Schwenken nicht.

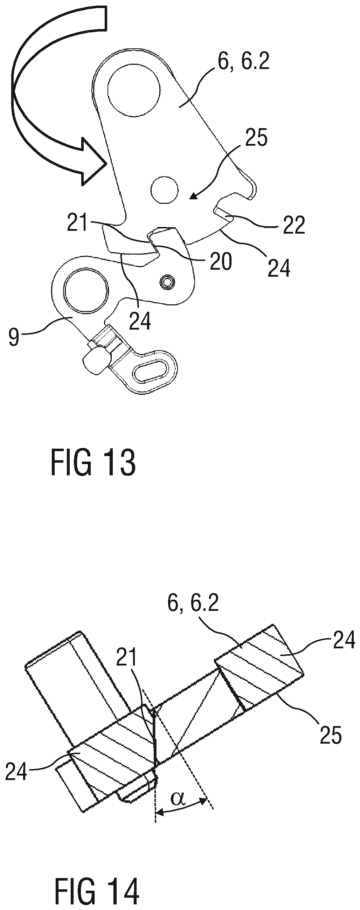

**Figuren 13 und 14** zeigen schematische Ansichten der Drehfalle 6 mit dem Kupplungshebel 9. Der Kupplungshebel 9 weist eine dritte Anschlagsfläche 20 auf, die durch die Kraft der Rückstellfeder 16 in eine korrespondierende vierte Anschlagsfläche 21 des zweiten Drehfallenelements 6.2 eingreift und daran anschlägt, wenn das Lenkrad 2 und damit auch die Drehfalle 6 in die zweite Komfortposition KP2 geschwenkt und der Betätigungsmechanismus 12 nicht betätigt ist oder in eine korrespondierende fünfte Anschlagsfläche 22 des zweiten Drehfallenelements 6.2 eingreift und daran anschlägt, wenn das Lenkrad 2 und damit auch die Drehfalle 6 in die erste Komfortposition KP1 geschwenkt und der Betätigungsmechanismus 12 nicht betätigt ist.

Die dritte Anschlagsfläche 20 und/oder die vierte und fünfte Anschlagsfläche 21, 22 weisen/weist eine Schräge auf, durch die der Kupplungshebel 9 bei Aufbringen einer hinreichend großen Kraft auf das Lenkrad 2, insbesondere auf den Lenkradkranz 4 in einer Sechs-Uhr-Position, aus der ersten Komfortposition KP1 oder der zweiten Komfortposition KP2 in Richtung der Fahrposition FP entgegen der Kraft der Feder 11 aus der zweiten Arbeitsebene AE2 und damit aus dem Eingriff mit dem zweiten Drehfallenelement 6.2 heraus verdrängt wird.

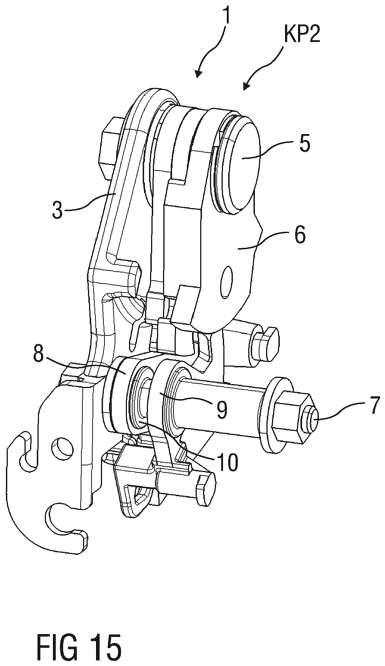

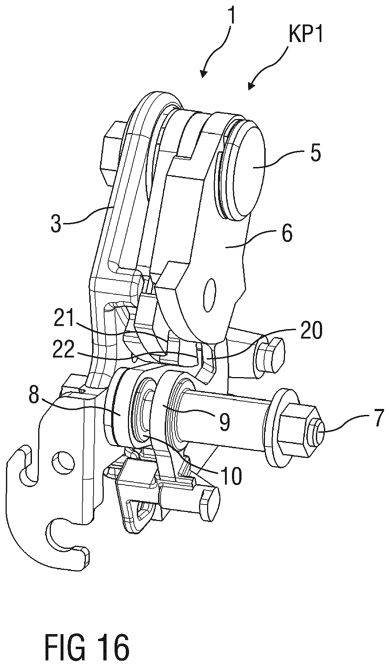

**Figur 15** ist eine schematische Ansicht der Verstelleinrichtung 1 in der zweiten Komfortposition KP2, wobei der Kupplungshebel 9 aus der zweiten Arbeitsebene AE2 und damit aus dem Eingriff mit dem zweiten Drehfallenelement 6.2 heraus verdrängt ist. **Figur 16** ist eine schematische Ansicht der Verstelleinrichtung 1 in der ersten Komfortposition KP1, wobei der Kupplungshebel 9 aus der zweiten Arbeitsebene AE2 und damit aus dem Eingriff mit dem zweiten Drehfallenelement 6.2 heraus verdrängt ist.

Ein Schwenken des Lenkrads 2 aus der zweiten Komfortposition KP2 oder der ersten Komfortposition KP1 heraus in Richtung der Fahrposition FP ist also zum einen durch Aufbringen einer hinreichend großen Kraft auf den Lenkradkranz 4 möglich, zum anderen jedoch auch dann, wenn zuvor der Betätigungsmechanismus 12 betätigt wird, beispielsweise der Bowdenzug 12 gezogen wird, um den Kupplungshebel 9 aus dem Eingriff mit dem zweiten Drehfallenelement 6.2 heraus zu schwenken.

Wenn das Lenkrad 2 sich infolge Betätigung des Betätigungsmechanismus 12 nicht in der zweiten Komfortposition KP2 oder der ersten Komfortposition KP1 befindet, dann liegt der Kupplungshebel 9 bei fortgesetzter Betätigung des Betätigungsmechanismus 12 nicht, oder ohne fortgesetzte Betätigung des Betätigungsmechanismus 12 infolge der Kraft der Rückstellfeder 16 an einer Peripheriefläche 24 des zweiten Drehfallenelements 6.2 an und behindert dessen Schwenken nicht. Wenn das Lenkrad 2 infolge von Aufbringen einer Kraft auf das Lenkrad 2 aus der zweiten Komfortposition KP2 oder der ersten Komfortposition KP1 verdrängt wurde, dann liegt der Kupplungshebel 9 ohne Betätigung des Betätigungsmechanismus 12 infolge der Kraft der Feder 11 an einer Seitenfläche 25 des zweiten Drehfallenelements 6.2 an und behindert dessen Schwenken nicht. Bei Erreichen der zweiten Komfortposition KP2 ausgehend von der ersten Komfortposition KP1 rückt der Kupplungshebel 9 ohne Betätigung des Betätigungsmechanismus 12 infolge der Kraft der Feder 11 mit seiner dritten Anschlagsfläche 20 in die vierte Anschlagsfläche 21 des zweiten Drehfallenelements 6.2 ein.

In einer Ausführungsform können die Federkonstante der Feder 11 und ein Winkel α der Schräge der dritten Anschlagsfläche 20 und/oder der vierten und fünften Anschlagsfläche 21, 22 so bemessen sein, dass eine Kraft von etwa 150 N bis 250 N, insbesondere 200 N, auf das Lenkrad 2, insbesondere den Lenkradkranz 4 auf dessen Sechs-Uhr-Position, zum Verdrängen des Kupplungshebels 9 aus der ersten Komfortposition KP1 oder der zweiten Komfortposition KP2 in Richtung der Fahrposition FP entgegen der Kraft der Feder 11 aus der zweiten Arbeitsebene AE2 und damit aus dem Eingriff mit dem zweiten Drehfallenelement 6.2 heraus ausreichend ist. Hierzu sind gegebenenfalls entsprechend die Hebellängen des Lenkrads 2, der Drehfalle 6, und der Reibfaktor der dritten Anschlagsfläche 20 und/oder der vierten und fünften Anschlagsfläche 21, 22 zu berücksichtigen. Beispielsweise kann der Winkel α der Schräge etwa 30° betragen.

Ferner kann am Lagerbock 3 ein Sensor 23, beispielsweise ein Mikroschalter 23, vorgesehen sein, der dazu konfiguriert ist zu detektieren, ob sich das Lenkrad 2 gesichert in der Fahrposition FP befindet. Hierzu kann eine Nockenfläche 26 an der Sperrklinke 8 vorgesehen sein, die den Sensor 23 oder Mikroschalter 23 nur dann betätigt, wenn die Sperrklinke 8 im Eingriff mit dem ersten Drehfallenelement 6.1 ist. Dies ist nur dann der Fall, wenn das Lenkrad 2 in der Fahrposition FP und der Betätigungsmechanismus 12 nicht betätigt ist. Mittels des Sensors 23 kann eine Steuerung des Fahrzeugs die Aufnahme eines Fahrbetriebs verhindern, wenn das Lenkrad 2 sich nicht gesichert in der Fahrposition FP befindet.

### BEZUGSZEICHENLISTE

- 1: Verstelleinrichtung
- 2: Lenkrad
- 3: Armatur, Lagerbock
- 4: Lenkradkranz
- 5: erste Achse
- 6: Drehfalle
- 6.1: weiteres Drehfallenelement, erstes Drehfallenelement
- 6.2: Drehfallenelement, zweites Drehfallenelement
- 7: zweite Achse
- 8: Sperrklinke
- 9: Kupplungshebel
- 10: Anschlag
- 11: Feder
- 12: Betätigungsmechanismus, Bowdenzug
- 13: Mitnehmermechanismus
- 14: Mitnehmernocken
- 15: Nockenbahn
- 16: Rückstellfeder
- 17: Anschlagsfläche, erste Anschlagsfläche
- 18: korrespondierende Anschlagsfläche, zweite Anschlagsfläche
- 19: Peripheriefläche
- 20: Anschlagsfläche, dritte Anschlagsfläche
- 21: korrespondierende Anschlagsfläche, vierte Anschlagsfläche
- 22: korrespondierende Anschlagsfläche, fünfte Anschlagsfläche
- 23: Sensor, Mikroschalter
- 24: Peripheriefläche
- 25: Seitenfläche
- 26: Nockenfläche
- 27: Lager

- AE1: weitere Arbeitsebene, erste Arbeitsebene
- AE2: Arbeitsebene, zweite Arbeitsebene
- FP: Fahrposition
- KP1: erste Komfortposition, weitere Position
- KP2: zweite Komfortposition, weitere Position

- α: Winkel

## Patentansprüche

1. Verstelleinrichtung (1) für ein Lenkrad (2) eines Kraftfahrzeugs, umfassend mindestens einen Lagerbock (3) mit einer darin angeordneten ersten Achse (5), die parallel zu einer Querachse des Fahrzeugs ausgerichtet oder ausrichtbar ist und um die das Lenkrad (2) zwischen einer Fahrposition (FP) und mindestens einer weiteren Position (KP1, KP2) schwenkbar ist,
wobei eine Drehfalle (6) mit einem in einer Arbeitsebene (AE2) angeordneten Drehfallenelement (6.2) drehfest mit dem Lenkrad (2) verbunden und mit diesem zusammen um die erste Achse (5) schwenkbar ist,
wobei eine zweite Achse (7) parallel zur ersten Achse (5) im Lagerbock (3) angeordnet ist,
wobei ein Kupplungshebel (9) auf der zweiten Achse (7) zur Interaktion mit dem Drehfallenelement (6.2) angeordnet ist,
wobei der Kupplungshebel (9) eine Anschlagsfläche (20) aufweist, die zum Eingriff in mindestens eine korrespondierende Anschlagsfläche (21, 22) des Drehfallenelements (6.2) eingreift und daran anschlägt, wenn das Lenkrad (2) und damit auch die Drehfalle (6) in die mindestens eine weitere Position (KP1, KP2) geschwenkt ist,
**dadurch gekennzeichnet, dass** der Kupplungshebel (9) auf der zweiten Achse (7) aus der Arbeitsebene (AE2) heraus entgegen der Kraft einer Feder (11) verschiebbar angeordnet ist,
wobei mindestens eine der Anschlagsflächen (20, 21, 22) eine Schräge aufweist, durch die der Kupplungshebel (9) bei Aufbringen einer vorbestimmten Kraft auf das Lenkrad (2) aus der weiteren Position (KP1, KP2) in Richtung der Fahrposition (FP) entgegen der Kraft der Feder (11) aus dem Eingriff mit dem Drehfallenelement (6.2) heraus verdrängbar ist oder verdrängt wird.

2. Verstelleinrichtung (1) nach Anspruch 1, wobei die Drehfalle (6) ein in einer weiteren Arbeitsebene (AE1) angeordnetes weiteres Drehfallenelement (6.1) aufweist, wobei eine Sperrklinke (8) auf der zweiten Achse (7) schwenkbar zur Interaktion mit dem weiteren Drehfallenelement (6.1) angeordnet ist, wobei die Sperrklinke (8) eine Anschlagsfläche (17) aufweist, die durch die Kraft einer Rückstellfeder (16) in eine korrespondierende Anschlagsfläche (18) des weiteren Drehfallenelements (6.1) eingreift und daran anschlägt, wenn das Lenkrad (2) und damit auch die Drehfalle (6) in die Fahrposition (FP) geschwenkt ist.

3. Verstelleinrichtung (1) nach Anspruch 1 oder 2, wobei ein Betätigungsmechanismus (12) angeordnet ist, um den Kupplungshebel (9) und/oder die Sperrklinke (8) aus einem Eingriff mit der Drehfalle (6) heraus um die zweite Achse (7) zu schwenken.

4. Verstelleinrichtung (1) nach einem der vorhergehenden Ansprüche, wobei der Kupplungshebel (9) mittels einer Feder (11) zur Arbeitsebene (AE2) hin vorgespannt ist.

5. Verstelleinrichtung (1) nach einem der vorhergehenden Ansprüche, wobei der Kupplungshebel (9) in verdrängter Position von einem Führungselement an der Drehfalle (6) am rotatorischen Einfallen gehindert ist.

6. Verstelleinrichtung (1) nach einem der Ansprüche 2 bis 5, wenn abhängig von Anspruch 2, wobei ein Mitnehmermechanismus (13) angeordnet ist, der beim Schwenken des Kupplungshebels (9) um einen vorbestimmten Drehwinkel auch die Sperrklinke (8) mitnimmt und aus einem möglichen Eingriff mit dem weiteren Drehfallenelement (6.1) heraus schwenkt.

7. Verstelleinrichtung (1) nach einem der vorhergehenden Ansprüche, wobei das Lenkrad (2) einen Lenkradkranz (4) aufweist, der bei geradegestelltem Lenkrad (2) in der Fahrposition (FP) zumindest im Wesentlichen in einer Ebene liegt, die rechtwinklig zu einer Lenksäule oder Lenkachse ausgerichtet ist, wobei als weitere Position (KP1, KP2) vorgesehen ist:
- eine erste Komfortposition (KP1), in der der Lenkradkranz (4) in einer Ebene liegt, die zumindest im Wesentlichen waagerecht zu einer Fahrbahnebene ausgerichtet ist, und
- eine zwischen der Fahrposition (FP) und der ersten Komfortposition (KP1) liegende zweite Komfortposition (KP2), in der der Lenkradkranz (4) aus der Waagerechten leicht, jedoch weniger als in der Fahrposition (FP), zu einem Fahrer hin geneigt ist.

8. Verstelleinrichtung (1) nach einem der vorhergehenden Ansprüche, wobei eine Federkonstante der Feder (11) und ein Winkel (α) der Schräge der Anschlagsfläche (20) des Kupplungshebels (9) und/oder der mindestens einen korrespondierenden Anschlagsfläche (21, 22) so bemessen sind, dass eine Kraft auf einen Lenkradkranz (4) des Lenkrads (2) auf dessen Sechs-Uhr-Position, insbesondere eine Kraft, die ein Fahrer in einer Ausnahmesituation in der Lage ist, auf den Lenkradkranz (4) aufzubringen, zum Verdrängen des Kupplungshebels (9) aus der weiteren Position (KP1, KP2) in Richtung der Fahrposition (FP) entgegen der Kraft der Feder (11) aus der Arbeitsebene (AE2) und damit aus dem Eingriff mit dem Drehfallenelement (6.2) heraus führt.

9. Verstelleinrichtung (1) nach einem der vorhergehenden Ansprüche, wobei zwischen der Arbeitsebene (AE2) und der weiteren Arbeitsebene (AE1) ein Anschlag (10) angeordnet ist, der verhindert, dass die Sperrklinke (8) die weitere Arbeitsebene (AE1) in Richtung der Arbeitsebene (AE2) verlässt, und dass der Kupplungshebel (9) aus der Arbeitsebene (AE2) in Richtung der weiteren Arbeitsebene (AE1) verschiebbar ist oder verschoben wird.

10. Verstelleinrichtung (1) nach einem der vorhergehenden Ansprüche, wobei ein Sensor (23) vorgesehen ist, der dazu konfiguriert ist zu detektieren, ob sich das Lenkrad (2) gesichert in der Fahrposition (FP) befindet, wobei der Sensor (23) als ein Mikroschalter (23) ausgebildet ist und wobei eine Nockenfläche (26) an der Sperrklinke (8) vorgesehen ist, die den Mikroschalter (23) nur dann betätigt, wenn die Sperrklinke (8) im Eingriff mit dem weiteren Drehfallenelement (6.1) ist.

11. Verstelleinrichtung (1) nach einem der vorhergehenden Ansprüche, wobei auf der ersten Achse (5) und/oder auf der zweiten Achse (7) ein Lager (27) angeordnet ist.

12. Verstelleinrichtung (1) nach Anspruch 11, wobei das Lager (27) als ein metallverstärktes, selbstschmierendes Gleitlager mit einer PTFE-Schicht ausgebildet ist.

13. Verstelleinrichtung (1) nach einem der vorhergehenden Ansprüche, wobei statt einer mechanischen Überlastauslösung eine alternative Zusatzauslösung aus der mindestens einen weiteren Position (KP1, KP2) mittels einer für einen Benutzer zugänglichen Öffnungshilfe vorgesehen ist.

14. Verstelleinrichtung (1) nach Anspruch 13, wobei die Öffnungshilfe einen Hebel, einen Griff und/oder eine Kordel aufweist.

## Claims

1. Adjusting device (1) for a steering wheel (2) of a motor vehicle, comprising
at least one bearing block (3) with a first shaft (5) which is arranged therein, is oriented or orientable parallel to a transverse axis of the vehicle, and about which the steering wheel (2) is pivotable between a driving position (FP) and at least one further position (KP1, KP2),
wherein a rotary catch (6) comprising a rotary catch element (6.2), arranged in an operating plane (AE2) is connected fixedly to the steering wheel (2) for conjoint rotation, and is pivotable together with the latter about the first shaft (5),
wherein a second shaft (7) is arranged parallel to the first shaft (5) in the bearing block (3),
wherein a coupling lever (9) is arranged on the second shaft (7) for interaction with the rotary catch element (6.2),
wherein the coupling lever (9) has a stop surface (20) which, for engagement, engages into at least one corresponding stop surface (21, 22) of the rotary catch element (6.2) and bears against the latter when the steering wheel (2) and therefore also the rotary catch (6) are pivoted into the at least one further position (KP1, KP2),
**characterized in that** the coupling lever (9) is arranged displaceably on the second shaft (7) out of the operating plane (AE2) counter to the force of a spring (11),
wherein at least one of the stop surfaces (20, 21, 22) has a bevel, by way of which, upon application of a predefined force on the steering wheel (2), the coupling lever (9) is displaceable or is displaced out of the further position (KP1, KP2) in the direction of the driving position (FP) counter to the force of the spring (11) out of the engagement with the rotary catch element (6.2).

2. Adjusting device (1) according to Claim 1, wherein the rotary catch (6) comprises a further rotary catch element (6.1) which is arranged in a further operating plane (AE1), wherein a locking pawl (8) is arranged on the second shaft (7) pivotably for interaction with the further rotary catch element (6.1), wherein the locking pawl (8) has a stop surface (17) which, by way of the force of a restoring spring (16), engages into a corresponding stop surface (18) of the further rotary catch element (6.1) and bears against the latter when the steering wheel (2) and therefore also the rotary catch (6) are pivoted into the driving position (FP).

3. Adjusting device (1) according to Claim 1 or 2, wherein an actuating mechanism (12) is arranged to pivot the coupling lever (9) and/or the locking pawl (8) out of engagement with the rotary catch (6) about the second shaft (7).

4. Adjusting device (1) according to one of the preceding claims, wherein the coupling lever (9) is preloaded towards the operating plane (AE2) by means of a spring (11).

5. Adjusting device (1) according to one of the preceding claims, wherein, in a displaced position, the coupling lever (9) is prevented from latching rotationally by a guide element on the rotary catch (6) .

6. Adjusting device (1) according to one of Claims 2 to 5 if dependent on Claim 2, wherein a follower mechanism (13) is arranged which, upon the pivoting of the coupling lever (9) by a predetermined rotary angle, also drives the locking pawl (8) and pivots it out of possible engagement with the further rotary catch element (6.1).

7. Adjusting device (1) according to one of the preceding claims, wherein the steering wheel (2) has a steering wheel rim (4) which, in the case of a straightened steering wheel (2) in the driving position (FP), lies at least substantially in a plane which is oriented at a right angle with respect to a steering column or steering shaft, wherein the following are provided as further position (KP1, KP2) :
- a first comfort position (KP1), in which the steering wheel rim (4) lies in a plane which is oriented at least substantially horizontally with respect to a roadway plane, and
- a second comfort position (KP2) which lies between the driving position (FP) and the first comfort position (KP1) and in which the steering wheel rim (4) is inclined slightly out of the horizontal, but less than in the driving position (FP), towards a driver.

8. Adjusting device (1) according to one of the preceding claims, wherein a spring constant of the spring (11) and an angle (α) of the bevel of the stop surface (20) of the coupling lever (9) and/or the at least one corresponding stop surface (21, 22) are dimensioned in such a way that a force on a steering wheel rim (4) of the steering wheel (2) in its 6 o'clock position, in particular a force which a driver is capable of applying to the steering wheel rim (4) in an exceptional situation, leads to the coupling lever (9) being displaced out of the further position (KP1, KP2) in the direction of the driving position (FP) counter to the force of the spring (11) out of the operating plane (AE2) and therefore out of the engagement with the rotary catch element (6.2) .

9. Adjusting device (1) according to one of the preceding claims, wherein a stop (10) is arranged between the operating plane (AE2) and the further operating plane (AE1), which stop (10) prevents the locking pawl (8) from leaving the further operating plane (AE1) in the direction of the operating plane (AE2), and prevents the coupling lever (9) from being displaceable or being displaced out of the operating plane (AE2) in the direction of the further operating plane (AE1).

10. Adjusting device (1) according to one of the preceding claims, wherein a sensor (23) is provided which is configured to detect whether the steering wheel (2) is situated in the driving position (FP) in a secured manner, wherein the sensor (23) is configured as a microswitch (23), and wherein a cam surface (26) is provided on the locking pawl (8), which cam surface (26) actuates the microswitch (23) only when the locking pawl (8) is in engagement with the further rotary catch element (6.1).

11. Adjusting device (1) according to one of the preceding claims, wherein a bearing (27) is arranged on the first shaft (5) and/or on the second shaft (7) .

12. Adjusting device (1) according to Claim 11, wherein the bearing (27) is configured as a metal-reinforced, self-lubricating plain bearing with a PTFE layer.

13. Adjusting device (1) according to one of the preceding claims, wherein, instead of a mechanical overload release means, an alternative auxiliary release means from the at least one further position (KP1, KP2) is provided by means of an opening aid which is accessible to the user.

14. Adjusting device (1) according to Claim 13, wherein the opening aid comprises a lever, a handle and/or a cord.

## Revendications

1. Dispositif de réglage (1) destiné à un volant (2) d'un véhicule automobile, ledit dispositif de réglage comprenant au moins un support de palier (3) dans lequel est disposé un premier axe (5) qui est orienté ou peut être orienté parallèlement à un axe transversal du véhicule et autour duquel le volant (2) peut pivoter entre une position de conduite (FP) et au moins une autre position (KP1, KP2),
un verrou rotatif (6) pourvu d'un élément de verrou rotatif (6.2) disposé dans un plan de travail (AE2) étant relié solidairement en rotation au volant (2) et pouvant pivoter conjointement autour du premier axe (5),
un deuxième axe (7) étant disposé dans le support de palier (3) parallèlement au premier axe (5),
un levier d'accouplement (9) étant disposé sur le deuxième axe (7) pour interagir avec l'élément de verrou rotatif (6.2),
le levier d'accouplement (9) comportant une surface de butée (20) qui s'engage dans au moins une surface de butée correspondante (21, 22) de l'élément de verrou rotatif (6.2) et venant en butée contre celle-ci lorsque le volant (2) et donc également le verrou rotatif (6) pivotent jusque dans au moins une autre position (KP1, KP2),
**caractérisé en ce que** le levier d'accouplement (9) est disposé sur le deuxième axe (7) de manière à pouvoir coulisser hors du plan de travail (AE2) en s'opposant à la force d'un ressort (11),
l'une au moins des surfaces de butée (20, 21, 22) présentant une inclinaison de sorte que, lorsqu'une force prédéterminée est appliquée sur le volant (2), le levier d'accouplement (9) se déplace ou peut se déplacer de l'autre position (KP1, KP2) à la position de conduite (FP) hors d'engagement avec l'élément de verrou rotatif (6.2) en s'opposant à la force du ressort (11).

2. Dispositif de réglage (1) selon la revendication 1, le verrou rotatif (6) comportant un autre élément de verrou rotatif (6.1) disposé dans un autre plan de travail (AE1), un cliquet (8) étant disposé de manière pivotante sur le deuxième axe (7) pour interagir avec l'autre élément de verrou rotatif (6.1), le cliquet (8) comportant une surface de butée (17) qui, par la force d'un ressort de rappel (16), s'engage dans une surface de butée correspondante (18) de l'autre élément de verrou rotatif (6.1) et vient en butée contre celle-ci lorsque le volant (2) et donc également le verrou rotatif (6) pivotent jusque dans la position de conduite (FP).

3. Dispositif de réglage (1) selon la revendication 1 ou 2, un mécanisme d'actionnement (12) étant disposé de manière à faire pivoter le levier d'accouplement (9) et/ou le cliquet (8) autour du deuxième axe (7) hors d'engagement avec le verrou rotatif (6).

4. Dispositif de réglage (1) selon l'une des revendications précédentes, le levier d'accouplement (9) étant précontraint vers le plan de travail (AE2) au moyen d'un ressort (11).

5. Dispositif de réglage (1) selon l'une des revendications précédentes, le levier d'accouplement (9) étant empêché d'embrayer en tournant dans la position déplacée par un élément de guidage sur le verrou rotatif (6).

6. Dispositif de réglage (1) selon l'une des revendications 2 à 5, si elle est dépendante de la revendication 2, un mécanisme d'entraînement (13) étant prévu qui, lorsque le levier d'accouplement (9) pivote d'un angle de rotation prédéterminé, entraîne également le cliquet (8) avec lui et le fait pivoter hors de tout engagement possible avec l'autre élément de verrou rotatif (6.1).

7. Dispositif de réglage (1) selon l'une des revendications précédentes, le volant (2) comportant un cerceau (4) qui, lorsque le volant (2) est dans la position de conduite (FP) et réglé tout droit, se trouve au moins sensiblement dans un plan qui est orienté perpendiculairement à une colonne de direction ou un axe de direction, une autre position (KP1, KP2) étant prévue qui est :
- une première position de confort (KP1) dans laquelle le cerceau (4) se trouve dans un plan qui est au moins sensiblement horizontal par rapport à un plan de route, et
- une deuxième position de confort (KP2) qui est située entre la position de conduite (FP) et la première position de confort (KP1) et dans laquelle le cerceau (4) est légèrement incliné vers un conducteur par rapport à l'horizontale, mais moins que dans la position de conduite (FP).

8. Dispositif de réglage (1) selon l'une des revendications précédentes, une constante d'élasticité du ressort (11) et un angle (α) de l'inclinaison de la surface de butée (20) du levier d'accouplement (9) et/ou de l'au moins une surface de butée correspondante (21, 22) étant dimensionnés de telle sorte qu'une force exercée sur un cerceau (4) du volant (2) à la position six heures de celui-ci, notamment une force qu'un conducteur est en mesure d'appliquer sur le cerceau (4) du volant dans une situation exceptionnelle, entraîne le déplacement du levier d'accouplement (9) de l'autre position (KP1, KP2) en direction de la position de conduite (FP) hors du plan de travail (AE2) et donc hors d'engagement avec l'élément de verrou rotatif (6.2) en s'opposant à la force du ressort (11).

9. Dispositif de réglage (1) selon l'une des revendications précédentes, une butée (10) étant disposée entre le plan de travail (AE2) et l'autre plan de travail (AE1), laquelle empêche que le cliquet (8) quitte l'autre plan de travail (AE1) en direction du plan de travail (AE2) et que le levier d'accouplement (9) se déplace ou puisse se déplacer du plan de travail (AE2) en direction de l'autre plan de travail (AE1).

10. Dispositif de réglage (1) selon l'une des revendications précédentes, un capteur (23) étant prévu qui est conçu pour détecter si le volant (2) est sécurisé dans la position de conduite (FP), le capteur (23) étant réalisé sous la forme d'un micro-interrupteur (23) et une surface de came (26) étant prévue sur le cliquet (8), laquelle actionne le micro-interrupteur (23) uniquement lorsque le cliquet (8) est en engagement avec l'autre élément de verrou rotatif (6.1).

11. Dispositif de réglage (1) selon l'une des revendications précédentes, un palier (27) étant disposé sur le premier axe (5) et/ou sur le deuxième axe (7).

12. Dispositif de réglage (1) selon la revendication 11, le palier (27) étant conçu comme un palier lisse autolubrifiant, renforcé de métal, avec une couche de PTFE.

13. Dispositif de réglage (1) selon l'une des revendications précédentes, au lieu d'un déclencheur mécanique par surcharge, un autre déclencheur supplémentaire à partir d'au moins une autre position (KP1, KP2) est prévu au moyen d'un auxiliaire d'ouverture accessible à un utilisateur.

14. Dispositif de réglage (1) selon la revendication 13, l'auxiliaire d'ouverture comportant un levier, une poignée et/ou un cordon.
